# EUROPEAN PATENT APPLICATION

(11) **EP 4 349 578 A1**
(43) Date of publication of application: **10.04.2024**
(21) Application number: 22200077.0
(22) Date of filing: 06.10.2022
(51) Int. Cl.: B29D 11/00

(54) **METHOD OF GENERATING A TOPOGRAPHIC STRUCTURE OR A PLURALITY OF TOPOGRAPHIC STRUCTURES AND PLASTIC SUBSTRATE**

(71) Applicant: Carl Zeiss Vision International GmbH, 73430 Aalen (DE)
(72) Inventor: LIU, Yujing, 73430 Aalen (DE); KARIM, Waiz, 73479 Ellwangen (DE); PENG, Bin, 73434 Aalen (DE)
(74) Representative: Louis Pöhlau Lohrentz

(57) **Abstract**

The invention is directed to a method of generating a topographic structure or a plurality of topographic structures developed out of or within a surface of an uncoated or a plastic substrate coated with a hard coat comprising the following steps: (a) providing a plastic substrate based on a plastic material having a front surface and a back surface, said plastic substrate being an uncoated plastic substrate or a plastic substrate coated with a hard coat, said hard coat covering at least one of said front surface and back surface; (b) depositing on at least one of said front surface and back surface droplet of a structuring ink; (c) irradiating said droplets of structuring ink deposited on at least one of said front surface and back surface; (d) removing said deposited droplets after having been irradiated and providing a topographic structure or a plurality of topographic structures developed out of or within said at least one of said front surface and back surface of said uncoated plastic substrate or plastic substrate coated with a hard coat. The invention also directed to a plastic substrate based on a plastic material having a front surface and a back surface, said plastic substrate being an uncoated plastic substrate or a plastic substrate coated with a hard coat, said hard coat covering at least one of said front surface and back surface, wherein a topographic structure or plurality of topographic structures is/are developed out of or within a surface of said plastic material of the uncoated plastic substrate or developed out of or within said hard coat of said coated plastic substrate.

## Description

The present invention is directed to a method of generating a topographic structure or a plurality of topographic structures out of or within a surface of an uncoated or a plastic substrate coated with a hard coat. Moreover, the present application is directed to a plastic substrate based on a plastic material having a front surface and a back surface, said plastic substrate being uncoated or coated with a hard coat.

WO 2022/084557 A1 is directed to a method of manufacturing a spectacle lens wherein the spectacle lens comprises a lens substrate and at least one coating. At least one surface of the uncoated or precoated front surface and/or back surface is provided with at least one coating. This coating on the front surface and/or back surface is then completely or partially contacted with at least one medium. Following this, at least one single electromagnetic pulse is applied to the at least one coating and the at least one medium on said front surface and/or back surface. The at least one medium can comprise at least one organic aliphatic saturated or unsaturated, optionally substituted, monocarboxylic acid. This at least one medium modifies the surface of the at least one coating and can be applied via inkjet printing. The at least one single electromagnetic pulse can be applied from a flash lamp.

The at least one coating being modifiable is a photochromic coating or a coating based on a coating composition usable for photochromic coating but without any photochromic dye.

The requirement of a photochromic coating or a coating based on a coating composition usable for a photochromic coating but without any photochromic dye is a limiting factor and associated with expensive cost which is disadvantageous.

WO 2021/260196 A1 discloses a method for manufacturing a coated lens wherein the coated lens comprises an uncoated or precoated optical lens substrate. The uncoated or precoated optical lens substrate comprising a front surface and a back surface is provided on at least one of the surfaces with at least one coating precursor material. The coating precursor material is converted into a coating layer by irradiation with at least one single electromagnetic pulse. By irradiating electromagnetic pulses, heat is generated for a short time with a peak intensity in the range of 0.01 W/cm² to 200 W/cm², for example using a flash lamp. Due to the pulsed application of energy, the optical lens substrate itself is heated less compared to the application of heat by a conventional thermal curing process.

WO 2021/260196 A1 is directed to the application of a complete layer or coating on an optical lens substrate and does not consider to topographically structure the surface of a plastic substrate.

EP 3 812 142 A1 is directed to a method for producing a spectable lens comprising a substrate and at least one coating, wherein the surface of said coating can be topographically structured by bringing into contact the at least one coating with at least one medium. Subsequently, the respectively prepared spectacle lens is irradiated with xenon light for several hours, such as, e.g., 16 to 20 h at a temperature of 35°C. The process disclosed in EP 3 812 142 A1 is not suitable for an efficient production due to a required irradiation over a longer period of time, such as several hours.

WO 2012/138516 A1 is directed to a method for drying a thin film stack having a thin film located on a substrate, wherein said thin film stack is conveyed past a flash lamp. The thin film stack is irradiated with a composite light pulse to remove solvent from said thin film, wherein said composite light pulse is formed by a plurality of micro-pulses from the flash lamp. The total time duration of the composite light pulse is shorter than a total thermal equilibration time of the film stack. WO 2012/138516 A1 does not allow generating a topographic structure or a plurality of topographic structures on a surface of a plastic substrate.

The object underlying the present invention is to provide an efficient method of generating a topographic structure or a plurality of topographic structures on a plastic substrate, in particular a spectacle lens substrate.

Moreover, it is an object of the present invention to provide a plastic substrate, in particular a spectacle plastic lens substrate, comprising a topographic structure or a plurality of topographic structures.

The object underling the invention is solved by providing a method of generating a topographic structure or a plurality of topographic structures developed out of or within a surface of an uncoated plastic substrate or a plastic substrate coated with a hard coat comprising the following steps:
(a) providing a plastic substrate based on a plastic material having a front surface and a back surface, said plastic substrate being an uncoated plastic substrate or a plastic substrate coated with a hard coat, said hard coat covering at least one of said front surface and back surface;
(b) depositing on at least one of said front surface and back surface droplets of a structuring ink;
(c) irradiating said droplets of structuring ink deposited on at least one of said front surface and back surface;
(d) removing said deposited droplets after having been irradiated and providing a topographic structure or a plurality of topographic structures developed out of or within said at least one of said front surface and back surface of said uncoated plastic substrate or plastic substrate coated with a hard coat.

Preferred embodiments of the method of the invention are provided in dependent claims 2 through 9.

The object underlying the present invention is also solved by providing a plastic substrate based on a plastic material having a front surface and a back surface, said plastic substrate being an uncoated plastic substrate or a plastic substrate coated with a hard coat, said hard coat covering at least one of said front surface and back surface, wherein a topographic structure or plurality of topographic structures is/are developed out of or within a surface of said plastic material of the uncoated plastic substrate or developed out of or within said hard coat of said plastic substrate coated with a hard coat.

Preferred embodiments of the plastic substrate are specified in dependent claims 11 to 15.

The term "plastic substrate" according to the invention means a substrate having two major surfaces which are essentially facing each other, and optionally one or more minor side surfaces, wherein the ratio of a minor side surface to a major is preferably at least 1:10, preferably at least 1:20. According to one embodiment of the invention the "plastic substrate" is a planar substrate, wherein the surfaces can be spaced apart by an essentially constant space so that the surfaces are essentially parallel to each other. The two major surfaces, however, can also enclose an angle, for example, in a range of above 0° and below 70°, preferably of above 5° and below 40°, further preferably of above 15° and below 25°.

The term "plastic substrate" means also plastic lens substrates, in particular a spectacle plastic lens substrate, having a lens shape, such as, for example, a biconvex lens, a biconcave lens, a convex-concave lens, a concave-convex lens, a plano-convex lens, and/or a plano-concave lens.

The "plastic substrate" according to the invention can be uncoated, meaning that the plastic substrate is preferably manufactured as a solid, preferably consisting only of one plastic material composition.

The "plastic substrate" can also be coated with a hard coat rendering the surface of the "plastic substrate" scratch resistant. The surface of the plastic substrate can be coated with a hard coat only on one surface of the two major surfaces or can be coated with a hard coat on both of the two major surfaces. The side surfaces, if any, can also be coated with a hard coat.

The feature "coated with a hard coat" means that the "plastic substrate" is coated with at least one hard coat. Thus, the plastic substrate, preferably "spectacle plastic lens substrate", can also be coated with two or three or more hard coat layers, the composition of which may identically to or different from each other.

The inventors have found out that an uncoated plastic substrate or a plastic substrate coated with a hard coat can be efficiently provided with a topographic structure or a plurality of topographic structures.

The method of the present invention allows to directly provide an uncoated plastic substrate with a topographic structure or a plurality of topographic structures which significantly simplifies previously known processes, such as known from WO 2022/084557 A1. For example, according to the present invention, it is not necessary to provide a costly photochromic coating or a coating based on a coating composition usable for a photochromic coating but without any photochromic dye in a first step, as it is mandatory according to the teaching of WO 2022/084557 A1, before being able to create a topographic structure.

The present invention allows to provide a topographic structure or a plurality of topographic structures, wherein it is not necessary to include an additional photochromic coating or an additional coating based on a coating composition usable for a photochromic coating but without any photochromic dye. Thus, the degree of freedom to provide a plastic substrate with a topographic structure or a plurality of topographic structures is significantly increased. Moreover, advantageously, the costs for producing a topographic structure or a plurality of topographical structures can be significantly reduced. In a preferred embodiment, the plastic substrate is a spectacle plastic lens substrate.

In order to improve mechanical properties of a spectacle plastic lens substrate, it is common to coat a spectacle plastic lens substrate with a hard coat. A hard coat is a scratch resistant coating which provides a spectacle plastic lens substrate with durability and increased longevity.

Plastic materials, in particular a spectacle plastic lens substrate scratch easily, for example, by mechanical impact of dust, in case no hard coat is applied.

It turned out that a plastic substrate coated with a hard coat can also be topographically structured with the method of the present invention. This finding is unexpected as it would have been expected that a hard coat, which renders the surface of a plastic scratch resistant, cannot be easily topographically structured.

According to a preferred embodiment of the invention at least one intermediate layer preferably one intermediate layer, is placed between the plastic substrate, preferably spectacle plastic lens substrate, and the hard coat. Preferably, a first surface of said one intermediate layer is in full and direct contact with the surface of the plastic substrate, preferably spectacle plastic lens substrate, and a second surface of said one intermediate layer is in full and direct contact with the surface of the hard coat, wherein the first surface and the second surface of the intermediate layer can also be described as lower surface and upper surface, respectively.

According to a preferred embodiment of the invention, said at least one intermediate layer, preferably one intermediate layer, is directly applied on the surface of the plastic substrate, preferably directly applied on the surface of the spectacle plastic lens substrate, wherein said hard coat is directly applied on said at least one intermediate layer, preferably said one intermediate layer.

Thus, according to a preferred embodiment of the invention, the topographical structure or plurality of topographic structures is developed out of or within a surface of a hard coat which is directly layered on said at least one intermediate layer, preferably one intermediate layer, which in turn is directly coated on said plastic substrate, preferably a spectacle plastic lens substrate.

The intermediate layer is preferably selected from the group consisting of an acrylic layer, methacrylic layer, methyl butyl arylate, epoxy-based resin, a mixture of acrylate and epoxy-based resins, and mixtures thereof.

According to another preferred embodiment of the invention, a hard coat is directly applied on the surface of the plastic substrate, preferably directly applied on the surface of the spectacle plastic lens substrate so that said hard coat is in full and direct contact with the surface of the plastic substrate. Thus, according to this preferred embodiment of the invention, the topographical structure or plurality of topographic structures is developed out of or within a surface of a hard coat which is directly coated on the plastic substrate, preferably a spectacle plastic lens substrate.

According to the invention, the at least one intermediate layer, in particular one intermediate layer, is not a photochromic coating or a coating based on a coating composition usable for a photochromic coating but without any photochromic dye.

Thus, the method of the present invention can be applied to both, an uncoated plastic substrate, in particular to an uncoated spectacle plastic lens substrate, on the one hand, and to a plastic substrate coated with a hard coat, in particular a spectacle plastic lens substrate coated with a hard coat, on the other hand.

The hard coat can be a conventional hard coat which is a thermally cured hard coat or a UV cured hard coat.

In the case of a thermally cured hard coat, the plastic substrate, in particular a spectacle plastic lens substrate, can be passed through a liquid bath of a solvent-based hard coat where the coating solution adheres to both the front surface and the back surface of the plastic substrate. Following this, the hard coat can then be allowed to cure in a hard temperature oven until stable.

In case of a UV cured hard coat, a liquid hard coat solution can be applied to the front surface and/or the back surface of the plastic substrate, in particular a spectacle plastic lens substrate, and can then be cured under irradiation of ultraviolet light for a specific period of time.

The plastic substrate is based on a plastic material, preferably consists of one defined plastic composition.

The plastic material can be selected from the group consisting of polyallyl diglycole carbonate, polyurea, polyurethane, polycarbonate, polythiourethane, polyepisulfide, polyacrylate, polymethacrylate, and mixtures thereof.

If the plastic substrate is a "spectacle plastic lens substrate", the front surface is usually convex and, if worn by a user, according to DIN EN ISO 13666:2019-12, facing away from the eye. The back surface is, in case of a spectacle plastic lens substrate, usually concave, and, if worn by a user, DIN EN ISO 13666:2019-12, facing to the eye. In case of a "plastic substrate", the front surface can also be designated as a first surface, and the back surface can also be designated as a second surface.

According to the method of the present invention, droplets of a structuring ink are deposited, preferably targeted, on at least one of the front surface and back surface. The droplets of the structuring ink stay to at least one of the front surface and back surface. Thus, the droplets of the structuring ink are preferably deposited at a defined position on at least one of the front surface and back surface of an uncoated plastic substrate or a plastic substrate coated with a hard coat, preferably at least one of the front surface and back surface of an uncoated spectacle plastic lens substrate a spectacle plastic lens substrate coated with a hard coat.

Preferably, the number of drops per area, for example a spot, deposited at the at least one surface can be strictly controlled. Further preferably, the distance between the one or more droplets of the structuring ink deposited at a position on the front surface and/or back surface of the plastic substrate, is specifically adjusted in accordance with the desired properties to be achieved on the respective surface.

Further preferably, the number of droplets deposited at a specific position, for example a spot, on at least one of the front surface and back surface of the plastic surface can also be adjusted depending on the properties to be achieved on the respective surface.

The droplets of structuring ink deposited at least on one of the front surface and back surface are exposed to irradiating with high energy electromagnetic irradiation in the form of at least one electromagnetic pulse, preferably more than one electromagnetic pulse, for example at least two electromagnetic pulses. The exposure to high energy electromagnetic pulses can also be described as flashlight photonic curing.

To apply at least one single electromagnetic pulse using the so-called flashlight annealing or photonic curing method, the plastic substrate or the plastic substrate coated with a hard coat, preferably spectacle plastic lens substrate or spectacle plastic lens substrate coated with a hard coat, on the surface of which droplets of a structuring ink are deposited, is exposed to ultra-short light pulses of high intensity. The major asset of this photonic curing method is its capability to obtain temperatures higher than 1000°C for example for a very short time without affecting the plastic substrate which may be based on a temperature sensitive plastic material or optical plastic lens material and which would not withstand such high temperatures.

The very short timescale of each single electromagnetic pulse allows the selective processing of the deposited droplets of structuring ink while not deteriorating a plastic substrate based on a temperature sensitive plastic or optical plastic material. The at least one single electromagnetic pulse can be applied from at least one electromagnetic source selected from the group consisting of at least one flash lamp, preferably from at least one xenon flash lamp, at least one halogen lamp, at least one directed plasma arc, at least one laser, at least one microwave generator, at least one induction heater, at least one electron beam, at least one stroboscope and at least one mercury lamp.

The at least one single electromagnetic pulse is preferably applied from at least one flash lamp. Preferably the at least one flash lamp is a flash lamp filled with a gas selected from xenon, krypton and/or argon, preferably xenon. The at least one single electromagnetic pulse has preferably a wavelength in the range from 100 nm to 1800 nm, more preferably in the range from 150 nm to 1300 nm, preferably 170 nm to 1100 nm, further preferably in the range from 200 nm to 1000 nm. The at least one single electromagnetic pulse also preferably has a wavelength in the range from 350 nm to 1000 nm, more preferably in the range from 400 nm to 800 nm, most preferably in the range from 420 nm to 700 nm. The wavelength of the at least one single electromagnetic pulse applied from at least one of the before mentioned electromagnetic sources is preferably in these wavelength ranges.

The at least one single electromagnetic pulse is applied to at least one of the surfaces of the plastic substrate, preferably optical plastic lens substrate, i.e. (i) to the front surface, (i) to the back surface, or (iii) to the front surface and the back surface. In case (iii) when at least one single electromagnetic pulse is to be applied to the front surface and the back surface the position of one of the electromagnetic sources mentioned before may be alternated so that the at least one single electromagnetic pulse is either directly applied to the front surface or directly applied to the back surface. Alternatively, in the before mentioned case (iii) at least two of the electromagnetic sources mentioned before are positioned in that the at least one single electromagnetic pulse is directly applied to the front surface and at least one single electromagnetic pulse is directly applied to the back surface, either simultaneously or alternately. In any case at least two electromagnetic sources are used these at least two electromagnetic sources may be of the identical type or of a different type.

In case only one of the surfaces of the plastic substrate, preferably spectacle plastic lens substrate, comprises deposited droplets, the at least one single electromagnetic pulse may be applied to the surface of the plastic substrate, preferably spectacle plastic lens substrate, comprising the deposited or the at least one single electromagnetic pulse may be applied to the surface of the plastic substrate, preferably spectacle plastic lens substrate, not comprising deposited droplets.

The wavelength of the at least one single electromagnetic pulse applied from at least one of the before mentioned electromagnetic sources is preferably in these wavelength ranges. The at least one single electromagnetic pulse is applied to at least one of the surfaces of the plastic substrate, preferably spectacle plastic lens substrate, i.e. (i) to the front surface of the plastic substrate, preferably spectacle plastic lens substrate, (i) to the back surface of the plastic substrate, preferably spectacle plastic lens substrate, or (iii) to the front surface and the back surface of the plastic substrate, preferably spectacle plastic lens substrate.

In case (iii) when at least one single electromagnetic pulse is to be applied to the front surface and the back surface of the plastic substrate, preferably spectacle plastic lens substrate, the position of one of the electromagnetic sources mentioned before may be alternated so that the at least one single electromagnetic pulse is either directly applied to the front surface or directly applied to the back surface of the plastic substrate, preferably spectacle plastic lens substrate. Alternatively, in the before mentioned case (iii) at least two of the electromagnetic sources mentioned before are positioned in that the at least one single electromagnetic pulse is directly applied to the front surface of the plastic substrate, preferably spectacle plastic lens substrate, and at least one single electromagnetic pulse is directly applied to the back surface of the plastic substrate, preferably spectacle plastic lens substrate, either simultaneously or alternately. According to a preferred embodiment at least two electromagnetic sources are used, wherein these at least two electromagnetic sources may be of the identical type or of a different type.

The term "single electromagnetic pulse" means the light that is delivered by at least one of the above-mentioned electromagnetic sources and applied to at least one surface of the plastic substrate, preferably spectacle plastic lens substrate, comprising deposited droplets of structuring ink. The at least one single electromagnetic pulse may be applied in one of the wavelength ranges defined above.

The at least one single electromagnetic pulse preferably has a defined duration, i.e., a defined envelope. The envelope may be in a range from 50 ps to 300 ms, preferably in a range from 100 ps to 250 ms, further preferably in a range from 120 ms to 230 ms.. Each single electromagnetic pulse may comprise at least two micro-pulses, each of the at least two micro-pulses having a defined duration within the envelope of each single electromagnetic pulse.

The duration of the at least two micro-pulses within the envelope of a single electromagnetic pulse may be identical to or different from each other. The percentage of the duration of all the micro-pulses within the envelope of a single electromagnetic pulse is defined as the duty cycle of the single electromagnetic pulse. Further, the at least one single electromagnetic pulse or at least one micro-pulse has a defined peak intensity.

The peak intensity is defined as the rate at which light energy is applied per unit time to a unit area of the at least one respective surface. The peak intensity is preferably in the range from 0.01 W/cm² to 200 W/cm², further preferably in the range from 0.1 W/cm² to 150 W/cm², preferably from 0.5 W/cm² to 100 W/cm², preferably from 1 W/cm² to 60 W/cm², further preferably 2 W/cm² to 30 W/cm², further preferably from 3 W/cm² to 10 W/cm². The peak intensity of at least two micro-pulses within the envelope of a single electromagnetic pulse may be identical to or different from each other. Preferably the peak intensity of the at least two micro-pulses within the envelope of a single electromagnetic pulse is identical to each other. The peak intensity between two consecutive micro-pulses within the envelope of a single electromagnetic pulse does not need to be zero or does not need to be constant or does not need to be equal.

If necessary, each single electromagnetic pulse may be repeated to provide an electromagnetic pulse train. Within the electromagnetic pulse train, each single electromagnetic pulse may be repeated at least twice and up to 1000 times, preferably each single electromagnetic pulse is repeated between 2 and 500 times. Preferably from 5 to 300 times, further preferably from 50 to 250 times, further preferably from 100 to 200 times. Within an electromagnetic pulse train, preferably an identical single electromagnetic pulse is repeated. Within an electromagnetic pulse train, the envelope of each single electromagnetic pulse may be identical to or different from each other. Preferably, within an electromagnetic pulse train, the envelope of each single electromagnetic pulse is identical. Within an electromagnetic pulse train, each single electromagnetic pulse may comprise at least two micro-pulses, the at least two micro-pulses, for example 2 to 10 micro-pulses, may be identical to or different from each other with respect to their peak intensity, duration and/or duty cycle. Each electromagnetic pulse may have a peak intensity as indicated *supra,* for example, in a range of 0.5 W/cm² to 100 W/cm², preferably from 1 W/cm² to 60 W/cm², further preferably 2 W/cm² to 30 W/cm², further preferably from 3 W/cm² to 10 W/cm².

Preferably, within an electromagnetic pulse train, each single electromagnetic pulse may comprise at least two micro-pulses, the at least two micro-pulses being identical to each other with respect to their peak intensity, duration and/or duty cycle. Within the electromagnetic pulse train comprising at least two single electromagnetic pulses, the at least two single electromagnetic pulses may be repeated with a repetition rate in a range from 0.1 Hz to 5 Hz, preferably from 0.2 Hz to 4 Hz, further preferably from 0.3 Hz to 3.5 Hz and most preferably from 0.4 to 2 Hz.

The peak intensity of at least one single electromagnetic pulse within the envelope of the at least one single electromagnetic pulse may progressively decrease within the envelope and/or with each micro-pulse within the at least one single electromagnetic pulse. For example, this decrease can be due to limitations of the charged capacitors of the electromagnetic source used for generating the at least one single electromagnetic pulse. The dose applied by at least one single electromagnetic pulse to the spectacle lens comprising the at least one coating, the at least one coating being covered completely or at least partially with the at least one medium, is the average intensity delivered with each single electromagnetic pulse over the total duration of the envelope where each single electromagnetic pulse may or may not comprise at least two micro-pulses each delivering a discrete amount of intensity. The dose applied by at least one single electromagnetic pulse may preferably be within the range from 0.001 J/cm² to 50 J/cm², further preferably from 0.1 J/cm² to 30 J/cm², more preferably from 1 J/cm² to 20 J/cm² and most preferably from 2.0 J/cm² to 15 J/cm². Particularly preferably, the dose applied is within a range from 3 J/cm² to 8 J/cm².

Any variation of any one of the before mentioned process parameters of the at least one single electromagnetic pulse may influence the topographic structure or plurality of topographic structure obtained when the at least one single electromagnetic pulse is applied to the deposited droplets of structuring ink.

In case the exposed droplets, i.e. irradiated drops, of the structuring ink stay or adhere only to one of the respective surfaces of the of the plastic substrate, preferably spectacle plastic lens substrate, the at least one single electromagnetic pulse may be applied to the surface of the plastic substrate, preferably spectacle plastic lens substrate, comprising the deposited droplets, or the at least one single electromagnetic pulse may be applied to the surface of the plastic substrate, preferably spectacle plastic lens substrate, not comprising the deposited droplets. In case on both the front surface and the back surface of the plastic substrate, preferably spectacle plastic lens substrate, droplets are deposited, the at least one single electromagnetic pulse may be applied to (i) the front surface of the plastic substrate, preferably spectacle plastic lens substrate, (ii) the back surface of the plastic substrate, preferably spectacle plastic lens substrate, or (iii) the front surface and the back surface of the plastic substrate, preferably spectacle plastic lens substrate. In said case (iii) the before mentioned possibilities with respect to the electromagnetic source are applicable.

After having exposed the deposited droplets to irradiation, the elevations on the respective surface, which is either a surface of an uncoated plastic substrate or a surface of a plastic substrate coated with a hard coat, are generated. The exposed droplets can be removed for example, by rinsing the front surface and/ the or back surface of a plastic substrate, preferably the spectacle plastic lens substrate, with a removal agent, for example, a suitable solvent such as an aqueous solvent, an organic solvent, or a mixture thereof.

The organic solvent can be any organic solvent being able to remove the residual droplets from the surface and which does not damage or affect the optical and/or mechanical properties of the front surface and/or back surface of the plastic substrate, preferably the front surface and/or back surface of the spectacle plastic lens substrate. The organic solvent can be selected, for example, from the group consisting of methanol, ethanol, n-propanol, isopropanol, acetone, methyl butyl ketone, water and mixtures thereof.

The rinsing can be done automatically using a rinse cycle in a washing machine. In addition, the plastic substrate, in particular the spectacle plastic lens substrate, can also be mechanically rubbed during rinsing to facilitate removal of the deposited cured droplets.

According to a preferred embodiment, the deposited droplets of structuring ink have a defined volume. The drop volume is preferably in a range of 1 pl to1 ml, preferably 10 pl to 0,5 ml, further preferably 15 pl to 0,25 ml, further preferably 50 pl to 0,1 ml, further preferably 50 pl to 0,25 ml to 50 µl, further preferably 75 pl to 10 µl, further preferably 100 pl to 5 µl, further preferably 150 pl to 1000 PI, further preferably 200 pl to 800pl.

Both, the drop volume as well as the number of drops per area, for example a spot, can be selected independently from each other in view of the topographic structure(s) to be generated.

According to another embodiment of the invention, the droplets may also have a defined size distribution.

According to another embodiment of the invention, the drop volume can also be undefined and may have, for example, an arbitrary size distribution.

The term "structuring ink" is meant to describe an ink, which preferably can be printed by a printer, preferably by an ink jet printer and is capable of inducing structural changes of the underlying plastic surface when being irradiated with high energy electromagnetic irradiation, preferably with one or more electromagnetic pulses as described above.

Preferably, the structuring ink does not contain a binding agent, further preferably does not contain a curable binding agent. If the structuring ink contains a binding agent, removal of the structuring ink from the plastic surface after having been irradiated with high energy electromagnetic irradiation may not be possible or at least significantly complicated.

The structuring ink preferably comprises at least an organic acid.

The structuring ink preferably comprise an organic acid in an amount of about 40 wt.-% to about 99 wt.-%, further preferably about 45 wt.-% to about 98 wt.-%, further preferably about 50 wt.-% to about 97 wt.-%, further preferably about 60 wt.-% to about 96 wt.-%, further preferably about 80 wt.-% to about 95 wt.-%, further preferably about 90 wt.-% to about 94 wt.-%.

If said at least one organic acid is a mono carboxylic acid, the structuring ink preferably comprise said at least one organic acid in an amount of about 70 wt.-% to about 99 wt.-%, further preferably about 75 wt.-% to about 98 wt.-%, further preferably about 80 wt.-% to about 97 wt.-%, further preferably about 85 wt.-% to about 96 wt.-%, further preferably about 90 wt.-% to about 95 wt.-%.

If said at least one organic acid a poly carboxylic caid, preferably with two to four carboxylic groups, preferably three carboxylic groups, the structuring ink preferably comprise an organic acid in an amount of about 40 wt.-% to about 75 wt.-%, further preferably about 42 wt.-% to about 70 wt.-%, further preferably about 44 wt.-% to about 65 wt.-%, further preferably about 46 wt.-% to about 60 wt.-%, further preferably about 48 wt.-% to about 50 wt.-%.

The at least one organic acid is preferably at least one liquid saturated or unsaturated aliphatic monocarboxylic acid, which is optionally be substituted, and comprises preferably 2 to 22 carbon atoms, further preferably 3 to 18 carbon atoms.

For example, the structuring ink preferably comprises at least one organic acid selected from the group consisting of acetic acid, propionic acid, acrylic acid, lactic acid, butyric acid, isobutyric acid, valeric acid, enanthic acid, caproic acid, caprylic acid, pelargonic acid, myristoleic acid, palmitoleic acid, linolenic acid, alpha-linolenic acid, gamma-linolenic acid, oleic acid, ricinoleic acid, stearidonic acid, stearic acid, arachidonic acid, eicosapentaenoic acid, docosapentaenoic acid, docosahexaenoic acid and mixtures thereof.

Moreover, the structuring ink preferably comprises at least one organic acid selected from the group consisting of acetic acid, lactic acid, butyric acid, caproic acid, caprylic acid, pelargonic acid, linolenic acid, alpha-linolenic acid, gamma-linolenic acid, oleic acid, and mixtures thereof. Further preferably, the composition comprises at least one organic acid selected from the group consisting of oleic acid, lactic acid, caprylic acid, and mixtures thereof.

Alternatively, the structuring ink can comprise at least one polycarboxylic acid, preferably tricarboxylic acid, such as citric acid, or an inorganic acid, such as hydrochloric acid.

According to another embodiment of the invention, the structuring ink comprises at least one organic acid selected from the group consisting of oleic acid, lactic acid, citric acid, and mixtures thereof.

The structuring ink is preferably formulated as an ink-jet printing ink in order to be able to be printed, preferably using an inkjet-printer.

The structuring ink can comprise a solvent, which can be an organic solvent, water, or a mixture of water and an organic solvent. The organic solvent can be a single organic solvent or can be a mixture of organic solvents, comprising, for example, a mixture of two or three or four or more organic solvents. According to a preferred embodiment, the organic solvent(s) is/are at least one alcoholic solvent and/or at least one ketone-type solvent.

The structuring ink can further comprise one additive or more additives, for example, to an additive adjust viscosity and/or an additive to adjust surface tension. The amount of each surfactant to be added is preferably within a range from 0 wt.% to 8, preferably from 0.1 wt.% to 8 wt.%, further preferably from 0.3 wt.% to 5 wt.%, further preferably from 0.5 wt.% to 2 wt.%, each based on the total weight of the structuring ink.

The additive to adjust viscosity of the structuring ink is preferably selected from the group consisting of solvents such as alcoholic solvents, MBK (methyl butyl ketone), water, and mixtures thereof.

According to another embodiment of the invention the structuring ink can comprise at least one thickening agent such as, for example, PVA (polyvinylalcohol), polyethylene glycol, polyacrylic acid copolymer, or mixtures thereof. The thickening agent can also be added to adjust ink viscosity. The amount of each thickening agent to be added is preferably within a range from 0 wt.% to 8, preferably from 0.1 wt.% to 8 wt.%, further preferably from 0.3 wt.% to 5 wt.%, further preferably from 0.5 wt.% to 2 wt.%, each based on the total weight of the structuring ink.

The additive to adjust surface tension of the structuring ink is preferably selected from the group consisting of fluropolymers based FC4430, silicone-based SF-1188A, BYK 333, BYK 345, Evonik Tego Glide 450 and mixtures thereof. The amount of surfactant(s) to be added is preferably within a range from 0 wt.% to 5, preferably from 0.1 to 2 wt.%, further preferably from 0.2 wt.% to 1.5 wt.%, each based on the total weight of the structuring ink.

Furthermore, the structuring ink can comprise decorative elements such as, for examples, dye(s) or pigment particle(s). The dye(s) can be a solvent soluble dye(s) or aqueous soluble dye(s). The decorative elements can be added to the structuring ink, for example, in an amount from 0 wt.% to 5, preferably from 0.1 to 3 wt.%, further preferably from 0.2 wt.% to 2 wt.%, each based on the total weight of the structuring ink.

According to a preferred embodiment of the method, said topographic structure of topographic structures is/are formed by at least one of elevations developed out of the surface of said uncoated plastic substrate or said plastic substrate coated with a hard coat, and of recesses developed within the surface of said uncoated plastic substrate or said plastic substrate coated with a hard coat.

According to another preferred embodiment of the method said elevation(s) of said topographic structure or plurality of topographic structures is/are formed by swelling of plastic material of said uncoated substrate or by swelling of said hard coat of said plastic substrate coated with a hard coat, and/or
wherein recess(es) of the topographic structure or plurality of topographic structures is/are formed within the respective surface by removing, preferably by etching, plastic material from said surface of the uncoated substrate or by removing, preferably by etching, hard coat of said plastic substrate coated with a hard coat.

During exposing the droplets of a structuring ink deposited on at least one of said front surface and back surface of said plastic substrate, preferably a spectacle plastic lens substrate, to high-energy electromagnetic radiation in the form of electromagnetic pulses, locally high temperatures are developed at the position, preferably spots, at which the droplets adhere to at least one of the front surface and back surface of the plastic substrate, preferably spectacle plastic lens substrate. The quantity of thermal energy developed at high temperatures during exposure of said droplets of a structuring ink emanates from the deposited drops to the surface spot of the front surface and/or back surface of the uncoated plastic substrate or the plastic substrate coated with a hard coat, wherein said plastic substrate is preferably a spectacle plastic lens substrate. Thus, a quantity of the thermal energy is transmitted to the contact area between the deposited droplets and the respective surface. Furthermore, thermal energy is lead into the uncoated plastic material or the hard coat below the contact zone resulting in a local heating of the plastic material or the hard coat below the contact zone.

The local heating induces a local swelling, or a local cratering or pinholing, respectively. It is assumed that the swelling on the one hand, or cratering or pinholing on the other hand are diffusion-controlled effects. These diffusion-controlled swelling, or diffusion-controlled cratering or pinholing is restricted to the contact area between the droplets exposed to irradiation and the respective surface of the uncoated plastic substrate, preferably uncoated spectacle plastic lens substrate, or the surface of the plastic substrate, preferably spectacle plastic lens substrate, coated with a hard coat.

Due to the swelling of the surface a topographic structure is induced wherein the elevations develop out of the surface of the uncoated plastic substrate or the hard coat of the plastic substrate coated with a hard coat. Thus, the created elevations are not formed through the deposited droplets of structuring ink. Rather the created elevations are formed out of the plastic material of the plastic substrate or the hard coat coated on a plastic substrate, respectively.

Phrased differently, the elevations are created out of the material of the underlying uncoated plastic substrate, in particular an uncoated spectacle plastic lens substrate or the hard coat of the plastic substrate coated with a hard coat, in particular a spectacle plastic lens substrate coated with a hard coat.

The size and/or the number of droplets of the structuring ink to be deposited at a position, preferably spot, on the respective surface can be chosen appropriately. Depending on the size and/or number of these droplets the structure and/or shape of the agglomerated droplets deposited at said position, preferably spot, can be adjusted. Thus, for example, the total volume and/or the shape of the agglomerated droplets can be defined in an appropriate manner. If the size and/or number of droplets is increased, the volume of the agglomerate of deposited droplets per spot is likewise increased. Moreover, the shape of the droplets or their agglomerate can depend on the surface tension difference between the structuring ink and the beneath lens substrate. Preferably, a relative spherical shape of the droplets is obtained.

When exposing the respective agglomerate of droplets to irradiation of at least one single electromagnetic pulse, preferably two or more electromagnetic pulses, as described *supra,* the quantity and/or intensity of thermal energy set free per position or per spot on the respective surface can be adjusted. The quantity of thermal energy or heat applied to a position or spot of the respective surface can influence the amount of elevation out of the respective surface, or cratering or pinholing within the respective surface.

Thus, by depositing a defined volume of droplets and/or a defined shape of the agglomerated droplets, the properties of the generated topographic structure or plurality of topographic structures can be adjusted.

The topographic structure or plurality of structures can also be defined by the density of topographic structures per area.

According to a preferred embodiment of the invention, the density of topographic structure(s) per area can be adjusted depending on the position on the respective surface. Thus, depending on the type of surface, e.g., a front surface and/or a back surface of the plastic substrate, preferably spectacle plastic lens substrate, the density per area, for example, of a particular type of topographic structure(s) can be adjusted appropriately. Furthermore, depending on the position on a respective surface, i.e., a central position or an edge position on a surface of the plastic substrate, preferably a spectacle plastic lens substrate, the density of at least one type of topographic structure(s) per area can differ from each other, for example in terms of shape, and/or height, and/or depth.

Thus, according to one embodiment of the invention, the topographic structure or topographic structures can be formed of elevations developed out of the surface of the uncoated plastic substrate, preferably an uncoated spectacle plastic lens substrate, or out of the surface of the plastic substrate coated with a hard coat, preferably a spectacle plastic lens substrate coated with a hard coat.

According to another embodiment of the invention, the topographic structure or topographic structures can be formed of recesses developed within the surface of the uncoated plastic substrate, preferably an uncoated spectacle plastic lens substrate, or the plastic substrate coated within a hard coat, preferably a spectacle plastic lens substrate coated with a hard coat.

According to another embodiment of the invention, said topographic structure or topographic structures has/have a three-dimensional shape, selected from the group of Gaussian shape, hemi-spherical lenslets, cones, truncated cones, cylinders, and mixtures thereof.

According to a preferred embodiment of the invention, in addition to or besides the density of a topographic structure or a plurality of topographic structures per area, also the shape, and/or height, and/or depth of the respective topographic structure(s) can be adjusted, for example, depending on the position on the respective surface on the plastic substrate, particularly on at least one of a front surface and back surface of a spectacle plastic lens substrate. Thus, depending on the type of surface, e.g., a front surface and/or a back surface, of the plastic substrate, preferably spectacle plastic lens substrate, the type of topographic structure(s) can be adjusted appropriately. Furthermore, depending on the position on a respective surface, i.e., a central position or an edge position on a surface of the plastic substrate, preferably a spectacle plastic lens substrate, the type of topographic structure(s) can differ from each other, for example in terms of shape, and/or height, and/or depth, and/or density per area.

As explained *supra,* the size and/or the number of droplets of the structuring ink to be deposited at a position, preferably spot, on the respective surface can be chosen appropriately. Depending on the size and/or number of these droplets the structure and/or shape of the agglomerated droplets deposited at said position, preferably spot, can be adjusted. Thus, for example, the total volume and/or the shape of the agglomerated droplets can be defined in an appropriate manner. If the size and/or number of droplets is increased, the volume of the agglomerate of deposited droplets per position, preferably spot, is likewise increased. In particular, the shape of the agglomerate can be adjusted to have a Gaussian shape, hemi-spherical lenslets, cones, truncated cones, cylinders, or mixtures thereof. The hemi-spherical lenslets can also be described as an array of hemi-spherical micro-lenses.

Thus, the present invention allows to provide a surface of a plastic substrate, in particular a surface of a spectacle plastic lens substrate, with one or more arrays of elevations and/or recesses.

According to a preferred embodiment of the invention, the method of the invention provides a plastic substrate, preferably a spectacle plastic lens substrate, or a plastic substrate coated with a hard coat, preferably a spectacle plastic lens substrate coated with a hard coat, with an array of topographic structure(s) as elevations having a Gaussian shape. The present invention is also directed to the respective product, which is preferably obtained by the method of the invention.

According to a preferred embodiment of the invention, the method of the invention allows to provide a plastic substrate, preferably a spectacle plastic lens substrate, or a plastic substrate coated with a hard coat, preferably a spectacle plastic lens substrate coated with a hard coat, with an array of topographic structure(s) as elevations having the shape of hemi-spherical lenslets. The present invention is also directed to the respective product, which is preferably obtained by the method of the invention.

According to a preferred embodiment of the invention, the method of the invention provides a plastic substrate, preferably a spectacle plastic lens substrate, or a plastic substrate coated with a hard coat, preferably a spectacle plastic lens substrate coated with a hard coat, with an array of topographic structure(s) as elevations having a shape of truncated cones. The present invention is also directed to the respective product, which is preferably obtained by the method of the invention.

According to a preferred embodiment of the invention, the method of the invention provides a plastic substrate, preferably a spectacle plastic lens substrate, or a plastic substrate coated with a hard coat, preferably a spectacle plastic lens substrate coated with a hard coat, with an array of topographic structure(s) as elevations having a shape of cylinders. The present invention is also directed to the respective product, which is preferably obtained by the method of the invention.

According to a preferred embodiment of the invention, the method of the invention provides a plastic substrate, preferably a spectacle plastic lens substrate, or a plastic substrate coated with a hard coat, preferably a spectacle plastic lens substrate coated with a hard coat, with an array of topographic structure(s) as recesses having a Gaussian shape. The present invention is also directed to the respective product, which is preferably obtained by the method of the invention.

According to a preferred embodiment of the invention, the method of the invention allows to provide a plastic substrate, preferably a spectacle plastic lens substrate, or a plastic substrate coated with a hard coat, preferably a spectacle plastic lens substrate coated with a hard coat, with an array of topographic structure(s) as recesses having the shape of hemi-spherical lenslets. The present invention is also directed to the respective product, which is preferably obtained by the method of the invention.

Thus, by depositing a defined volume of droplets and/or a defined shape of the agglomerated droplets, the properties of the generated topographic structure or plurality of topographic structures can be adjusted.

The droplets of structuring ink can be deposited at the respective surface, for example, by pipetting or spraying or printing. For, example, by using a pipette, in particular larger volumes of structuring ink can easily applied in a controlled manner.

According to a preferred embodiment of the invention said method further comprises the step of: depositing said droplets of structuring ink by ink-jet printing.

When using ink-jet printing technology, the droplets can be deposited at at least one specific position on the respective surface. Moreover, the volume of the droplets can be adjusted precisely. Furthermore, the periodicity and density of the droplets deposited via ink-jet printing can be appropriately adjusted. In addition, the number of droplets to be deposited at a specific position on the respective surface can be adjusted.

It is also possible to define the shape of the agglomerate of the droplets. For example, if the agglomerated droplets deposited on a respective surface shall have the shape of a conus, the number of droplets deposited via ink-jet printing to a particular position, preferably spot, on the surface can be continuously increased from the circular margin region to the center of the position, preferably spot. If the agglomerate of droplets deposited at a respective surface shall have a shape of a cylinder, the number of droplets from the circular margin to the center can be adjusted to be constant over the circular cross section of the position, preferably spot.

According to another preferred embodiment of the invention said at least one hard coat (HC) preferably comprises or consists of polysiloxane. The at least one hard coat is converted from a hard coat precursor material, for example by chemical reaction, such as polymerizing, by curing, sintering and/or hardening, into a polymerized and/or cured and/or sintered and/or hardened coating or layer.

The at least one hard coat precursor material preferably comprises
A)
   a) at least one silane derivative of the formula (I) Si(OR¹)(OR²)(OR³)(OR⁴), wherein R¹, R², R³ and R⁴, which may be the same or different, are selected from an alkyl, an acyl, an alkyleneacyl, a cycloalkyl, an aryl or an alkylenearyl group, each of which may optionally be substituted, and/or
   b) at least one hydrolysis product of the at least one silane derivative of the formula (I), and/or
   c) at least one condensation product of the at least one silane derivative of the formula (I), and/or
   d) any mixture of the components a) to c) thereof;
B)
   a) at least one silane derivative of the formula (II) R⁶R⁷3-ₙSi(OR⁵)ₙ, in which R⁵ is selected from an alkyl, an acyl, an alkyleneacyl, a cycloalkyl, an aryl or an alkylenearyl group, each of which may optionally be substituted, R⁶ is an organic radical containing an epoxide group, R⁷ is selected from an alkyl, a cycloalkyl, an aryl or an alkylenearyl group, each of which may optionally be substituted, n is 2 or 3; and/or
   b) at least one hydrolysis product of the at least one silane derivative of the formula (II), and/or
   c) at least one condensation product of the at least one silane derivative of the formula (II), and/or
   d) any mixture of the components a) to c) thereof;
C) at least one colloidal inorganic oxide, hydroxide, oxide hydrate, fluoride and/or oxyfluoride;
D) at least one epoxide compound having at least two epoxide groups; and
E) at least one catalyst system comprising at least one Lewis acid and at least one thermolatent Lewis acid-base adduct.

The term "at least one hydrolysis product" of the at least one silane derivative of the formula (I) or (II) respectively expresses the fact that the at least one silane derivative of the formula (I) or of the formula (II) each has already been at least partly hydrolyzed to form silanol groups.

The term "at least one condensation product" of the at least one silane derivative of the formula (I) or of the formula (II) respectively expresses the fact that a certain degree of crosslinking has also already taken place through condensation reaction of the silanol groups.

The at least one silane derivative of the formula (I) may be selected from tetramethoxysilane, tetraethoxysilane, tetrapropoxysilane, tetraisopropoxysilane, tetrabutoxysilane, tetraisobutoxysilane, tetrakis(methoxyethoxy)silane, tetrakis(methoxypropoxy)silane, tetrakis(ethoxyethoxy)silane, tetrakis(methoxyethoxyethoxy)silane, trimethoxyethoxysilane, dimethoxydiethoxysilane or mixtures thereof.

The at least one silane derivative of the formula (II) may be selected from 3-glycidoxymethyltrimethoxysilane, 3-glycidoxypropyltrihydroxysilane, 3-glycidoxypropyldimethyl-hydroxysilane, 3-glycidoxypropyldimethylethoxysilane, 3-glycidoxypropylmethyldiethoxysilane, 3-glycidoxypropyltrimethoxysilane, 3-glycidoxypropyltriethoxysilane, 3-glycidoxypropyldimethoxymethylsilane, 3-glycidoxypropyldiethoxymethylsilane, 2-(3,4-epoxycyclohexyl)ethyltrimethoxysilane or mixtures thereof.

The at least one colloidal inorganic oxide may be selected from silicon dioxide, titanium dioxide, zirconium dioxide, tin dioxide, antimony oxide, aluminum oxide or mixtures thereof.

The mean particle diameter of the at least one colloidal inorganic oxide, hydroxide, fluoride or oxyfluoride is preferably selected such that the transparency of the at least one coating is not affected. Preferably, the at least one colloidal inorganic oxide, hydroxide, oxide hydrate, fluoride and/or oxyfluoride has a mean particle diameter in the range of from 2 nm to 150 nm, even more preferably of from 2 nm to 70 nm. The mean particle diameter is determined preferably by means of dynamic light scattering. The at least one colloidal inorganic oxide, hydroxide, oxide hydrate, fluoride or oxyfluoride contributes to an increase in scratch resistance through incorporation into the existing network. In addition, selection of at least one colloidal inorganic oxide, hydroxide, oxide hydrate, fluoride or oxyfluoride allows the refractive index of the at least one coating to be matched to the refractive index of the optical lens substrate.

The at least one epoxide compound having at least two epoxide groups is preferably a polyglycidyl ether compound, more preferably a diglycidyl ether or triglycidyl ether compound.

The at least one catalyst system comprising at least one Lewis acid and at least one thermolatent Lewis acid-base adduct enables very homogeneous crosslinking and hence also consistent high strength over the entire layer thickness of the at least one coating. The term "Lewis acid" relates to an electrophilic electron pair acceptor compound, the term "Lewis base" is understood to mean an electron pair donor compound. The at least one Lewis acid is preferably one which have catalytic activity even at relatively low temperatures, for example at room temperature. The at least one Lewis acid may be selected from ammonium salts, metal salts (especially of metals from one of groups 1 (i.e. alkali metal salts), 2 (i.e. alkaline earth metal salts) or 13 (preferably Al or B) of the periodic table of the elements, halides of an element of group 13 of the periodic table of the elements (especially AIX₃ or BX₃ where X is chlorine or fluorine), organic sulphonic acids and amine salts thereof, alkali metal or alkaline earth metal salts, for example alkali metal or alkaline earth metal salts of carboxylic acids, fluoride salts, organotin compounds, or a mixture thereof. Preferred metal salts of metals from one of groups 1, 2 and 13 of the periodic table of the elements are, for example, perchlorates or carboxylates (i.e., carboxylic salts). Preferred Lewis acids are, for example, ammonium perchlorate, magnesium perchlorate, sulphonic acids and salts thereof, such as trifluoromethanesulphonic acids and salts thereof.

The at least one Lewis acid-base adduct is understood to mean a compound which has catalytic activity (with regard to the chemical reaction in question) only at relatively high temperatures, while it is essentially still catalytically inactive at room temperature. Only through the supply of sufficient thermal energy or heat is a thermolatent catalyst compound converted to a catalytically active state.

The at least one silane derivative of the formula (I) and/or the at least one hydrolysis product of the silane derivative of the formula (I) and/or the at least one condensation product of the silane derivative of the formula (I) is/are preferably present in the at least one coating precursor material in an amount of 5% by weight to 50% by weight, more preferably of 5% by weight to 20% by weight. The amounts given before applies with regard to the at least one silane derivative of the formula (I), with regard to the at least one hydrolysis product of the formula (I), with regard to the at least one condensation of the formula (I) or with regard to any mixture thereof. The amounts given before applies as well with regard to a mixture of silane derivatives of the formula (I), with regard to a mixture of hydrolysis products of the at least one silane derivative of the formula (I), with regard to a mixture of condensation products of the at least one silane derivative of the formula (I) or with regard to any mixture thereof.

The at least one silane derivative of the formula (II) and/or the at least one hydrolysis product of the silane derivative of the formula (II) and/or the at least one condensation product of the silane derivative of the formula (II) is/are preferably present in the at least one coating precursor material in an amount of 5% by weight to 50% by weight, more preferably of 5% by weight to 20% by weight. The amounts given before applies with regard to the at least one silane derivative of the formula (II), with regard to the at least one hydrolysis product of the formula (II), with regard to the at least one condensation of the formula (II) or with regard to any mixture thereof. The amounts given before applies as well with regard to a mixture of silane derivatives of the formula (II), with regard to a mixture of hydrolysis products of the at least one silane derivative of the formula (II), with regard to a mixture of condensation products of the at least one silane derivative of the formula (II) or with regard to any mixture thereof.

The weight ratio of the at least one silane derivative of the formula (I), the at least one hydrolysis product of the silane derivative of the formula (I) and/or the at least one condensation product of the silane derivative of the formula (I) relative to the at least one silane derivative of the silane derivative of the formula (II), the at least one hydrolysis product of the silane derivative of the formula (II) and/or the at least one condensation product of the silane derivative of the formula (II) is preferably in the range of from 95/5 to 5/95, more preferably in the range of from 70/30 to 30/70, even more preferably in the range of from 60/40 to 40/60.

The at least one colloidal inorganic oxide, hydroxide, fluoride and/or oxyfluoride is preferably present in an amount of 5% by weight to 50% by weight, more preferably of 5% by weight to 25% by weight, based on the total weight of the hard coat precursor material. The amounts mentioned before apply for one type of colloidal oxide, one type of hydroxide, one type of fluoride, one type of oxyfluoride, for a mixture thereof, for a mixture of different colloidal oxides, a mixture of different colloidal hydroxides, a mixture of different colloidal fluorides, a mixture of different colloidal oxyfluorides or for a mixture thereof. The mixture of different colloidal oxides, hydroxides, fluorides or oxyfluorides may for comprises one type of each in different particle sizes or different types of each in the same or in a different particle size.

The at least one epoxide compound having at least two epoxide groups is preferably present in an amount of 0.1% by weight to 10% by weight, more preferably of 0.5% by weight to 10% by weight, based on the total weight of the at least one hard coat precursor material. The amounts given before apply with regard to one type of epoxide compound or to a mixture of different types of epoxide compounds.

The at least one catalyst system is preferably present in an amount in the range from 0.01% by weight to 5% by weight, more preferably in the range from 0.1% by weight to 3% by weight, based on the total weight of the hard coat precursor material.

The weight ratio of at least one Lewis acid to the at least one thermolatent Lewis acid-base adduct is preferably in the range from 20/1 to 1/2, more preferably from 5/1 to 2/1. The coating precursor material preferably comprises at least one solvent comprising an alcohol, an ether, an ester or water. In case the at least one solvent comprises two different solvents, the boiling point of the first solvent S1 and the boiling point of the second solvent S2 is either S1/S2 ≥ 1.2 or S1/S2 ≤ 0.8. Further, in case the at least one solvent comprises two different solvents, the weight ratio of the first solvent to the second solvent is preferably in the range of from 5 to 0.01, more preferably in the range of from 2 to 0.2.

Preferably water is present in an amount of 2% by weight to 15% by weight, based on the total weight of the hard coat precursor material.

The components of the at least one coating precursor material resulting in at least one hard coat are used in that they add to 100% by weight.

The at least one hard coat precursor material resulting in at least one hard coat is preferably applied to at least one coated or uncoated surface of the uncoated or coated optical lens substrate by dip coating or by spin coating.

The use of the at least one hard coat precursor material comprising the components (A) to (E), i.e. at least one silane derivative of formula (I), at least one hydrolysis product and/or at least one condensation product thereof, at least one second silane derivative of formula (II), at least one hydrolysis product and/or at least one condensation product thereof, at least one colloidal inorganic oxide, hydroxide, fluoride or oxyfluoride, at least one epoxide compound and at least one catalyst system, on the application of sufficient thermal energy enables the production of at least one hard coat having very good adhesive strength on different optical lens substrates, having a high hardness, being of high scratch resistance and showing a low tendency to crack formation on different optical lens substrates. In addition, the direct application of heat is at a sufficient level that initiates the catalytic activity of the at least one Lewis acid-base but below a threshold temperature that the optical properties and/or the mechanical properties and/or the functional properties of neither the uncoated or coated optical lens substrate nor of the coated lens are deteriorated due to thermal effects. Therefore, by the direct application of heat, the coating precursor material enters an equilibrium state and cannot be further tuned or adjusted or modified. The already very good mechanical and/or optical properties and/or functional properties of the at least one hard coat are tunable or adjustable or modifiable with the application of at least one single electromagnetic pulse. The adjustment or the modification or the tunability of at least one mechanical property and/or of at least one optical property or of at least one functional property is preferably given by using at least two recipes that allow to change at least one specific target value within a given range of the selected mechanical and/or optical and/or functional property or properties. The at least two recipes may comprise at least one of the following process parameters: the total process duration, the wavelength of each single electromagnetic pulse, the total dose delivered by at least one single electromagnetic pulse, the number of micro-pulses within a one single electromagnetic pulse, the average duty cycle, the total number of repetitions of the at least one single electromagnetic pulse or the repetition rate of the at least one single electromagnetic pulse. Variation of at least one of the process parameters provides a different recipe, which allows to select a different value of the indentation hardness of the coated lens.

The at least one hard coat precursor material more preferably comprises
A) a) at least one silane derivative of the formula (III) R¹R²3-ₙSi(OR³)ₙ, wherein R¹ comprises an alkyl group, a cyclo alkyl group, an acyl group, an aryl group or an hetero aryl group, each of which may be substituted, R² is an organic rest comprising an epoxide group, R³ comprises an alkyl group, a cyclo alkyl group, an aryl group or a hetero aryl group, each of which may be substituted, n = 2 or 3, and/or b) at least one hydrolysis product of the silane derivative of the formula (III), and/or c) at least one condensation product of the silane derivative of the formula (III), and/or d) any mixture of components a) to c);
B) at least one colloidal inorganic oxide, hydroxide, oxide hydrate, fluoride and/or oxyfluoride;
C) at least one epoxy component comprising at least two epoxy groups; and
D) at least one catalyst system comprising at least one Lewis acid and at least one thermolatent Lewis base-adduct.

The term "at least one hydrolysis product" of the at least one silane derivative of the formula (III) the fact that the at least one silane derivative of the formula (III) has already been at least partly hydrolyzed to form silanol groups.

The term "at least one condensation product" of the at least one silane derivative of the formula (III) the fact that a certain degree of crosslinking has also already taken place through condensation reaction of the silanol groups.

The at least one silane derivative of the formula (III) and/or the at least one hydrolysis product of the silane derivative of the formula (III) and/or the at least one condensation product of the at least one silane derivative of the formula (III) and/or any mixture thereof is/are present in the at least one hard coat precursor material in a total amount in the range preferably of from 9% by weight to 81 % by weight, further preferably of from 13% by weight to 76% by weight, more preferably of from 19% by weight and most preferably of from 23% by weight to 66% by weight, each based on the total weight of the at least one hard coat precursor material. The amounts given before applies with regard to the at least one silane derivative of the formula (III), with regard to the at least one hydrolysis product of the formula (III), with regard to the at least one condensation of the formula (III) or with regard to any mixture thereof. The amounts given before apply as well with regard to a mixture of silane derivatives of the formula (III), with regard to a mixture of hydrolysis products of the at least one silane derivative of the formula (III), with regard to a mixture of condensation products of the at least one silane derivative of the formula (III) or with regard to any mixture thereof.

The at least one colloidal inorganic oxide, hydroxide, oxide hydrate, fluoride and/or oxyfluoride is/are present in the at least one hard coat precursor material in a total amount in the range preferably of from 3% by weight to 60% by weight, further preferably of from 6% by weight to 58% by weight, more preferably of from 9% by weight to 57% by weight and most preferably of from 13% by weight to 55% by weight, each based on the total weight of the coating precursor material. The amounts given before apply with regard to one type of colloidal inorganic oxide, one type of colloidal inorganic hydroxide, one type of colloidal inorganic oxide hydrate, one type of colloidal inorganic fluoride, one type of colloidal inorganic oxyfluoride and any mixture thereof. The amounts given before apply as well with regard to a mixture of different colloidal inorganic oxides, a mixture of different colloidal inorganic hydroxides, a mixture of different colloidal inorganic oxide hydrates, a mixture of different colloidal inorganic fluorides, a mixture of different colloidal inorganic oxyfluorides or any mixture thereof. The mentioned mixtures may include each different particles sizes or different types of colloidal inorganic oxides, hydroxides, oxide hydrates, fluorides and/or oxyfluorides.

The at least one epoxide compound comprising at least two epoxide groups is present in the at least one hard coat precursor material in an amount in the range preferably of from 0.01% by weight to 14% by weight, further preferably of from 0.07% by weight to 11 % by weight, more preferably of from 0.1 % by weight to 6% by weight and most preferably of from 0.2% by weight to 13% by weight, each based on the total weight of the at least one hard coat precursor material. The amount given before apply with regard to one type of epoxide compound as well as with regard to a mixture of different epoxide compounds.

The at least one catalyst system comprising at least one Lewis acid and at least one thermolatent Lewis base-adduct is present in the at least one hard coat precursor material in an amount in the range preferably of from 0.04% by weight to 4% by weight, further preferably of from 0.1% by weight to 3% by weight, more preferably of from 0.2% by weight to 2% by weight and most preferably 0.3% by weight to 1 % by weight, each based on the total weight of the at least one hard coat precursor material. The weight ratio of the at least one Lewis acid to the at least one thermolatent Lewis base-adduct is preferably in a range of from 20:1 to 2:1, further preferably of from 18:1 to 1:2, more preferably of from 13:1 to 1:1 and most preferably of from 6:1 to 1:1.

The at least one hard coat precursor material may comprise at least one organic solvent and/or water. The components of the at least one hard coat precursor material resulting in at least one hard coat are used in that they add to 100% by weight.

As at least one silane derivate of the formula (III) 3-glycidoxymethyhtrimethoxysilane, 3-glycidoxypropyltrihydroxysilane, 3-glycidoxypropyl-dimethylhydroxysilane, 3-glycidoxypropyldimethylethoxysilane, 3-glycidoxypropylmethyldiethoxysilane, 3-glycidoxypropyltrimethoxysilane, 3-glycidoxypropyhtriethoxysilane, 3-glycidoxypropyldimethoxymethyhsilane, 3-glycidoxypropyldiethoxymethylsilane and/or 2-(3,4-epoxycyclohexyl)ethyltrimethoxysilane for example may be used in the at least one coating precursor material. Preferably, 3-glycidoxypropyltrimethoxysilane and/or 3-glycidoxypropyltriethoxysilane is/are used as silane derivative of the formula (III).

The at least one colloidal inorganic oxide, hydroxide, oxide hydrate may be a metal oxide, metal hydroxide, metal oxide hydrate, where the metal ions of the metal oxide, metal hydroxide, metal oxide hydrate comprise or are the metals of titanium, preferably TiO₂, of silicon, preferably SiO₂, of zirconium, preferably ZrO₂, of tin, preferably SnO₂, of antimony, preferably Sb₂O₃, of aluminum, preferably Al₂O₃ or AIO(OH) and/or mixed oxides and/or mixtures thereof. Preferably, the colloidal inorganic oxide, hydroxide, oxide hydrate is a metal oxide, metal hydroxide, metal oxide hydrate, wherein the metal ions of the metal oxide, metal hydroxide, metal oxide hydrate comprises or are metals of titanium, silicon, zirconium or mixtures thereof, further preferably of silicon. Further preferably, the at least one colloidal inorganic oxide, hydroxide, oxide hydrate forms core-shell particles. In such core-shell particles the core comprises preferably a metal oxide, metal hydroxide, metal oxide hydrate, wherein the metal ions of the metal oxide, metal hydroxide, metal oxide hydrate comprises or are metals of titanium, preferably TiO₂, and/or of zirconium, preferably ZrO₂ and the shell comprises preferably a metal oxide, metal hydroxide, metal oxide hydrate, wherein the metal ions of the metal oxide, metal hydroxide, metal oxide hydrate comprises or are silicon, preferably SiO₂. As colloidal inorganic fluoride magnesium fluoride may be used. The at least one colloidal oxide, hydroxide, oxide hydrate, fluoride and/or oxyfluoride has a mean particle size in the range preferably of from 3 nm to 70 nm, further preferably of from 6 nm to 64 nm, more preferably of from 8 nm to 56 nm and most preferably 9 nm to 52 nm.

As at least one epoxide compound comprising at least two epoxide compounds diglycidyl ether, ethylenglycoldiglycidyl ether, propylenglycoldiglycolglycidyl ether, 1 ,4-butandioldiglycidyl ether, 1,6-hexandioldiglycidyl ether, trimethylolpropantriglycidyl ether, triglycidylglycerin and/or trimethylolethantriglycidylether for example may be used in the at least one coating precursor material. Preferably, the at least epoxide compound comprises trimethylolpropantriglycidyl ether, butandioldiglycidyl ether and/or 1,6-hexandioldiglycidyl ether.

As at least one Lewis acid ammonium perchlorate, magnesium perchlorate, sulfonic acids and/or salts of sulfonic acids, such as trifluormethane sulfonic acid and/or salts thereof, for example may be used in the at least one catalyst system.

As at least one Lewis base-adduct a metal complex compound, such as aluminum acetylacetonate, iron acetylacetonate and/or zinc acetylacetonate, for example may be used in the at least one catalyst system.

The use of the at least one hard coat precursor material comprising the components (A) to (D), i.e., at least one silane derivative of the formula (III), at least one hydrolysis product and/or at least one condensation product thereof, least one colloidal inorganic oxide, hydroxide, oxide hydrate, fluoride or oxyfluoride, at least one epoxide compound and at least one catalyst system, on the application of sufficient thermal energy enables the production of at least one hard coat having very good adhesive strength on different optical lens substrates, having a high hardness, being of high scratch resistance and showing a low tendency to crack formation on different optical lens substrates. In addition, the direct application of heat is at a sufficient level that initiates the catalytic activity of the at least one Lewis acid-base but below a threshold temperature that the optical properties and/or the mechanical properties and/or the functional properties of neither the uncoated or coated optical lens substrate nor of the coated lens are deteriorated due to thermal effects. Therefore, by the direct application of heat, the coating precursor material enters an equilibrium state and cannot be further tuned or adjusted or modified. The already very good mechanical and/or optical properties of the at least one hard coat are tunable or adjustable or modifiable with the application of at least one single electromagnetic pulse. The adjustment or the modification or the tunability of at least one mechanical property and/or of at least one optical property or of at least one functional property is preferably given by using at least two recipes that allow to change at least one specific target value within a given range of the selected mechanical and/or optical and/or functional property or properties. The at least two recipes may comprise at least one of the following process parameters: the total process duration, the wavelength of each single electromagnetic pulse, the total dose delivered by at least one single electromagnetic pulse, the number of micro-pulses within a one single electromagnetic pulse, the average duty cycle, the total number of repetitions of the at least one single electromagnetic pulse or the repetition rate of the at least one single electromagnetic pulse. Variation of at least one of the process parameters provides a different recipe, which allows to select a different value of the indentation hardness of the coated lens.

The at least one hard coat preferably has an average thickness in the range of from 0.6 µm to 7.1 µm, further preferably in the range of from 0.8 µm to 6.6 µm, more preferably in the range of from 1.1 µm to 5.8 µm and most preferably of from 1.6 µm to 4.9 µm. The average thickness of the at least one hard coat is preferably determined by the measurement of the spectral reflectivity and/or the spectral transmissivity.

The at least one hard coat precursor material resulting in at least one hard coat is preferably applied to at least one uncoated surface of the plastic substrate, preferably to at least one uncoated surface spectacle plastic lens substrate, for example, by dip coating or by spin coating.

According to a preferred embodiment of the invention, each topographic structure has a diameter within a range of 200 nm to 35 mm, preferably of 300 nm to 10 mm, preferably of 500 nm to 5 mm, preferably of 1 µm to 2 mm.

According to a preferred embodiment of the invention, each topographic structure has a height or depth within a range of 5 nm to 5 µm, preferably of 50 nm to 4 µm, preferably of 500 nm to 2 µm.

According to a preferred embodiment of the invention a topographic structure is spaced apart from another topographic structure within a range of 10 µm to 5 mm, preferably of 50 µm to 3 mm, preferably of 100 µm to 2 mm, preferably of 120 µm to 1,8 mm, preferably of 170 µm to 1,6 mm, preferably of 180 µm to 1,5 mm, preferably of 190 µm to 1,4 mm, preferably of 210 µm to 1,2 mm, preferably of 240 µm µm to 1,1 mm, preferably of 370 µm to 1 mm.

According to another embodiment of the invention, the ratio of the diameter of the topographical structure to the height or depth of the topographical structure is preferably in a range of 10:1 to 5000:1, preferably of 20:1 to 4000:1, further preferably of 50:1 to 3000:1, preferably 75:1 to 2500:1, preferably of 100:1 to 2000:1.

A topographic structure can be, for example, one single elevation or a single recess. Thus, a diameter of an elevation can be defined as the maximum distance on a base line from which the elevation goes up and returns to. A diameter of a recess can be defined as the maximum distance on a base line from which the recess goes down and returns to. The base line can be defined as the surface of the plastic substrate, preferably spectacle plastic lens substrate, without elevations or recesses.

According to another embodiment of the invention, the method comprises the additional step of coating said topographic structure or said plurality of topographic structures with one or more layers of a material distinct from the material of said topographic structure or said plurality of topographic structures, thus embedding said topographic structure or said plurality of topographic structures in or under said one or more layers of said material distinct from said material of said topographic structure or plurality of topographic structures.

The at least one additional layer can be selected from the group consisting of, anti-reflection layer(s), for example a sequence of one or more high and low refractive layers, ultraviolet protection layer, anti-blue-light layer, hydrophobic layer, super hydrophobic layer, and combinations thereof. These layers can be applied conventionally, for example, by vapor deposition, such as, for example, physical vapor deposition or chemical vapor deposition, dip-coating, spin-coating, and/or spray-coating.

Preferably, the at least one additional coating is applied with a defined layer thickness throughout the layer. The at least one layer can be applied to at least one of the front surface and back surface of the plastic substrate, preferably spectacle plastic lens substrate. The layer can be applied completely or partially on a topographically structures surface.

According to another preferred embodiment of the invention, said hard coating layer is partially cured or fully cured before said droplets of structuring ink are deposited on said hard coating layer and are irradiated.

It turned out that the properties of the generated topographical structure(s) can be varied and/or modified in terms of diameter and/or height and/or depth depending on the degree of curing of the hard coat.

According to a preferred embodiment of the invention, the hard coat is partially cured before depositing the structuring ink followed by irradiation with electromagnetic pulses as described above.

According to a preferred embodiment of the invention, the hard coat is fully cured before depositing the structuring ink followed by irradiation with, electromagnetic pulses as described above.

According to another preferred embodiment of the invention said topographic structure or plurality of topographic structures having a height and/or a depth and/or a diameter which each can be varied. For example, the height and/or depth and/or the diameter of the topographical structure(s)can be varied independently from each other.

According to another preferred embodiment of the invention said plastic substrate is a spectacle plastic lens substrate.

The spectacle plastic lens substrate is preferably based on an optical material, the optical material being defined according to section 3.3.1 of DIN EN ISO 13666:2019-12 as transparent material capable of being manufactured into optical components. The spectacle lens substrate may be made of mineral glass according to section 3.3.1 of DIN EN ISO 13666:2019-12 and/or of an organic hard resin such as a thermosetting hard resin according to section 3.3.3 of DIN EN ISO 13666:2019-12; a thermoplastic hard resin according to section 3.3.4 of DIN EN ISO 13666:2019-12; or a photochromic material according to section 3.3.5 of DIN EN ISO 13666:2019-12.

Preferably, the spectacle plastic lens substrate is based on at least one of the optical materials mentioned in the following table, particularly preferred on at least one of the organic hard resins.

**Table: Examples of optical materials**

| Trade name | Optical material | Average refractive index n_{D*} | Abbe number V_{D*} |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) | 1.500 | 56 |
| RAVolution | Polyurea / Polyurethane | 1.500 | 54 |
| Trivex | Polyurea / Polyurethane | 1.530 | 45 |
| Panlite, Lexan, Makrolon | Polycarbonate (PC) | 1.590 | 29 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectra lite | Urethane / Methacrylate | 1.54 | |

The invention is also directed to a plastic substrate based on a plastic material having a front surface and a back surface, said plastic substrate being an uncoated plastic substrate or a plastic substrate coated with a hard coat, said hard coat covering at least one of said front surface and back surface, wherein a topographic structure or plurality of topographic structures is/are developed out of or within a surface of said plastic material of the uncoated plastic substrate or developed out of or within said hard coat of said coated plastic substrate. According to a preferred embodiment of the invention the plastic substrate is a spectacle plastic lens substrate.

The explanations provided with respect to the method of the invention apply likewise to the plastic substrate, preferably the spectacle plastic lens substrate, which can be processed or obtained by the method of the invention. In particular, the explanations provided with respect to the hard coat, the dimensions of the topographical structure(s) apply likewise to the plastic substrate, preferably the spectacle plastic lens substrate, which can be processed or obtained by the method of the invention.

According to another embodiment of the invention said topographic structure or said plurality of topographic structures is/are embedded in one or more layers of a material distinct from said material of the topographic structure or plurality of topographic structures.

Thus, the plastic substrate, preferably a spectacle plastic lens substrate, comprising a topographical structure or a plurality of topographical structures developed out of and/or within the surface of the uncoated plastic substrate, preferably spectacle plastic lens substrate, or out of and/or within the surface of the plastic substrate coated with a hard coat, preferably a spectacle plastic lens substrate coated with a hard coat, can comprise one or more additional layers. The at least one additional layer can be selected from the group consisting of, anti-reflection layer(s), for example a sequence of one or more high and low refractive layer, ultraviolet protection layer, anti-blue-light layer, hydrophobic layer or super hydrophobic layer.

A high refractive layer can be defined to have a refraction index of 1.80 or more at a wavelength of 550 nm. A low refractive layer can be defined to have a refraction index of less than 1.80 at a wavelength of 550 nm. Preferably, the difference of refraction index between a sequence of high refractive and low refractive layers is at 0.1 or more.

The topographic structure or plurality of topographic structures is/are embedded in the first layer directly applied to the topographic structure(s). The topographic structure or plurality of topographic structures are then translated to said first layer. Following this, the topographic structure or plurality of topographic structure(s) are then translated from said first layer to each of subsequently applied layer(s). In the end, the topographic structure or plurality of topographic structures is/are formed on the outermost layer.

The topographic structure(s) on the outermost layer can improve surface properties of a plastic substrate, preferably a spectacle plastic lens substrate. For example, the topographic structure(s) can be used to modify or adjust hydrophilicity, for example, to modify or reduce the contact angle for water.

According to a preferred embodiment of the invention, the topographic structure or plurality of topographic structures is/are transparent, preferably in a case wherein said topographic structure each has a diameter within a range of 2 µm to 35 mm and further preferably in a case wherein a height or a depth of said topographic structure is within a range of 5 nm to 5 µm, and maintain(s) a transmittance level of said uncoated plastic substrate, preferably spectacle plastic substrate, or said plastic substrate coated with a hard coat, preferably spectacle plastic lens substrate coated with a hard coating.

According to a preferred embodiment of the invention said topographic structure or plurality of topographic structures form a functional top surface which is selected from the group consisting of a hydrophobic surface, super hydrophobic surface, such as, for example an easy-to-clean surface, antifog surface, antimicrobial surface, and mixtures thereof.

The topographic structure(s) can also be used to modify or adjust hydrophobicity, for example, to modify or to increase the contact angle for water. If the contact angle for water is around 90° than the surface is defined to be hydrophobic. If the contact angle for water is more than 90°, for example more than 95°, preferably more than 100°, preferably more than 110°, preferably more than 130°, the surface is defined to be hydrophobic. If the contact angle is about 160° then the surface is defined to have the so-called lotus effect. The contact angle can be measured, for example, with the device OCA 15CE of DataPhysics Instruments GmbH, 70794 Filderstadt, Germany according to manufacturer's instructions.

According to a preferred embodiment of the invention, the surface of said plastic substrate, preferably spectacle plastic lens substrate, can have at least one array of topographic structure(s) having hydrophilic properties and at least one array having hydrophobic properties.

According to another aspect of the invention, the topographic structure or plurality of topographic structures can provide or modify a self-cleaning property, for example an easy-to-clean surface, to or of the surface of the plastic substrate, preferably to or of the surface of the spectacle plastic lens substrate. The surface can be uncoated or coated with a hard coat

It turned out that the topographic structure or plurality of topographic structures does not impair the optical properties of the plastic substrate, in particular of the spectacle plastic lens substrate. Thus, neither the vision nor other properties such as, for example, transparency and/or anti-reflection properties and/or anti-ultra-violet properties and/or anti-blue-light properties are impaired, compared to a respective plastic substrate, in spectacle plastic lens substrate, without any topographic structure(s),

In the following the invention is further illustrated by Examples and Figures, which, however, are not to be understood to limit scope of invention. The scope of invention is solely defined by the claims.

### Figures

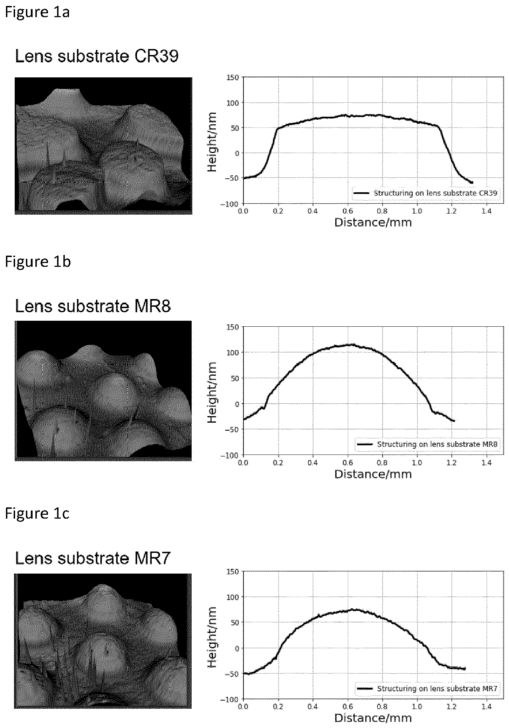

**Fig. 1a** shows structuring of an uncoated spectacle plastic lens substrate of CR39 (height of topographic structure: 122 nm) via inkjet printing of structuring-ink and ultrashort-pulses light treatment.
**Fig. 1b** shows structuring of an uncoated spectacle plastic lens substrate of MR8 (height of topographic structure: 133 nm) via inkjet printing of structuring-ink and ultrashort-pulses light treatment.
**Fig. 1c** shows structuring of an uncoated spectacle plastic lens substrate of MR7 (height of topographic structure: 95 nm) via inkjet printing of structuring-ink and ultrashort-pulses light treatment.

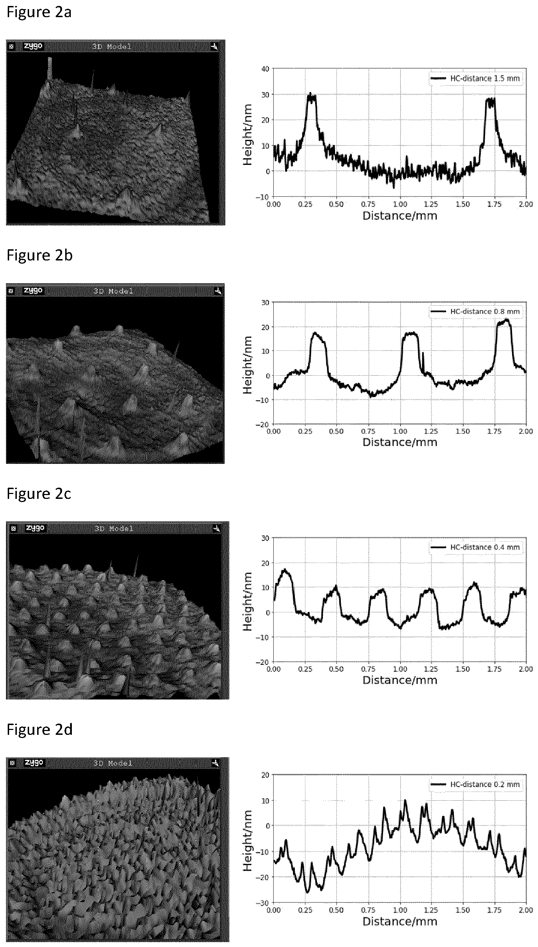

**Fig. 2a** shows surface structuring of a spectacle plastic lens substrate coated with a hard coat via inkjet printing of structuring-ink and ultrashort-pulses light treatment (lenslet distances: 1.5 mm).
**Fig. 2b** shows surface structuring of a spectacle plastic lens substrate coated with a hard coat via inkjet printing of structuring-ink and ultrashort-pulses light treatment (lenslet distances: 0.8 mm).
**Fig. 2c** shows surface structuring of a spectacle plastic lens substrate coated with ca hard coat via inkjet printing of structuring-ink and ultrashort-pulses light treatment (lenslet distances: 0.4 mm).
**Fig. 2d** shows surface structuring of a spectacle plastic lens substrate coated with a hard coat via inkjet printing of structuring-ink and ultrashort-pulses light treatment (lenslet distances: 0.2 mm):

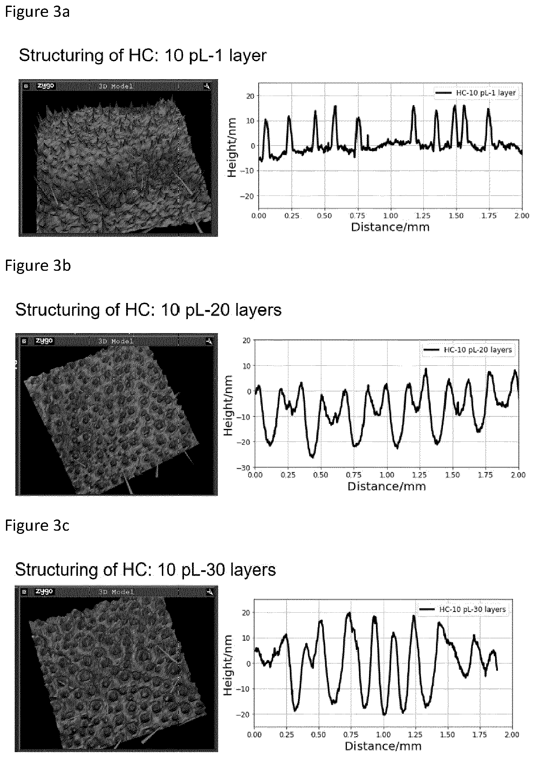

**Fig. 3a** shows topographically structured HC surface with elevations, obtained by structuring with 10 pL - 20 layers. with positive elevations and with negative recession features, by increasing the amount of structuring ink
**Fig. 3b** shows topographically structured HC surface with recesses, obtained by structuring with 10 pL - 20 layers.
**Fig. 3c** shows topographically structured HC surface with recesses, obtained by structuring with 10 pL - 30 layers.

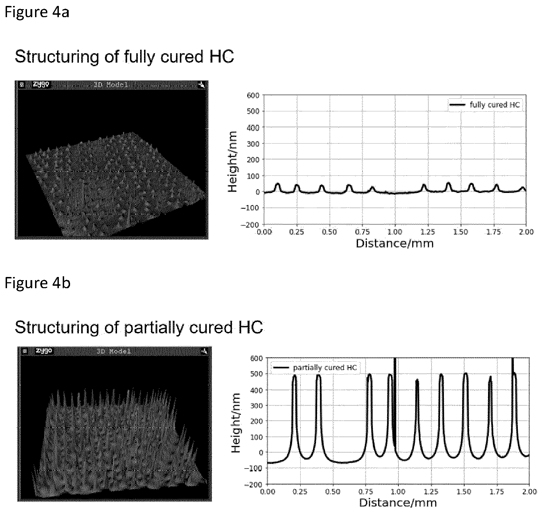

**Fig. 4a** shows different feature height by structuring a fully cured HC resin.
**Fig. 4b** shows different feature height by structuring a partially cured HC resin.

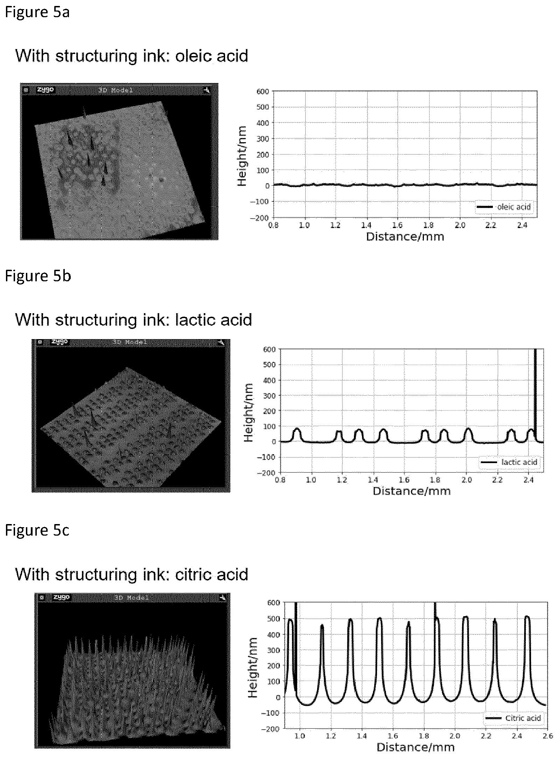

**Fig. 5a** shows surface structuring of spectacle plastic lens substrates coated with a partially cured hard coat via inkjet printing of structuring-ink containing oleic acid and ultrashort-pulses light treatment.
**Fig. 5b** shows surface structuring of spectacle plastic lens substrates coated with a partially cured hard coat via inkjet printing of structuring-ink containing lactic acid and ultrashort-pulses light treatment.
**Fig. 5c** shows surface structuring of spectacle plastic lens substrates coated with a partially cured hard coat via inkjet printing of structuring-ink containing citric acid and ultrashort-pulses light treatment.

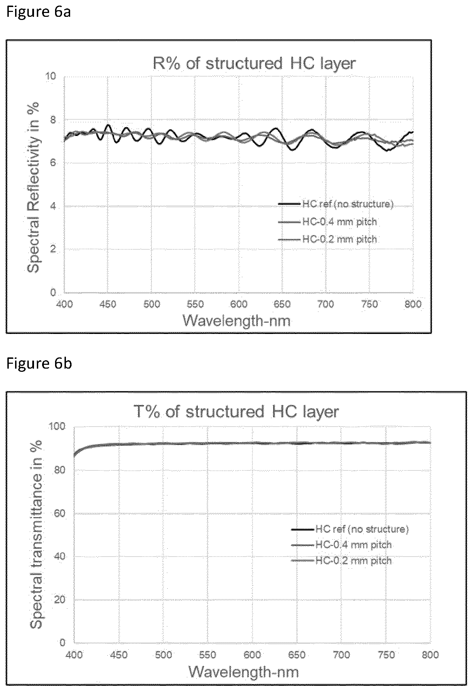

**Fig. 6a** shows optical properties (reflectivity) of a spectacle plastic lens surface coated with a hard coating, measured with UV-vis spectrometer.
**Fig. 6b** shows optical properties (transmittance) of a spectacle plastic lens surface coated with a hard coating, measured with UV-vis spectrometer.

### Examples

### Examples 1-3: Surface structuring of uncoated spectacle plastic lens substrate

In Examples 1 to 3 the uncoated spectacle plastic lens substrate was CR39 (Example 1) having a refractive index of 1.50, MR8 (Example 2) having a refractive index of 1.60, and MR7 (Example 3) having a refractive index of 1.67. These uncoated plastic lens substrates are all thermoset plastics, which are supposed to be stable against heat (below 115°C) and at the presence of general chemicals.

However, when exposing the above-mentioned lens substrates with selectively deposited structuring-ink drops to high-energy electromagnetic pulses, topographical structures can be formed.

In Example 1-3, the structuring inks were deposited via inkjet printing process, with Pixdro inkjet printer LP50 of Süss Microtec SE equipped with Spectra-S class printhead with 128 nozzles and nozzle size of 80 pL, printed under 972 dpi. The deposited drops were agglomerations of 81 printed droplets and had a a drop-to-drop distance of 1 mm on the afore mentioned uncoated spectacle plastic lens substrates. The structuring ink was deposited on the whole lens substrate, with a size of 40 cm². The printing temperature was 50-55°C.

The structuring ink droplets (ink) had the following composition: 94.5 wt.% oleic acid (99% purity, Sigma-Aldrich), 0.5 wt.% Silicone based surfactant SF1188A Momentive Performance Materials, a copolymer of polydimethylsiloxane and polyoxyalkylene ether) and 5 wt.% 1-methoxy-2-proponal.

After deposition of the droplets, a high energy electromagnetic pulse was applied on top of lens substrates (also called photonic curing): The process conditions of application of electromagnetic pulse train are indicated as Condition 1. Condition 1 is set up as an electromagnetic pulse train consisting of 160 electromagnetic pulses within a total process duration of 107 seconds in ambient air. The wavelength of each single electromagnetic pulse was between 200 nm to 1000 nm *(full range).*

Each of 160 electromagnetic pulses delivered a dose of 5.35 J/cm2. Each of the 160 electromagnetic pulses were divided into 8 micro-pulses at an average duty-cycle of 30%. The envelope of each of the 160 electromagnetic pulses was 225 ms.

After the photonic curing the deposited droplets were removed by rinsing with isopropanol for 30 seconds.

After removal of the deposited droplets, topographical structures with a height of around 100-150 nm, a diameter of close to 1 mm and having a shape of a cylinder to semi-spherical lenslets were detected.

The combined process from ink deposition till ink removal was finished within a few minutes (less than 5 minutes).

The results are summarized in Table 1.

The results showed that uncoated spectacle plastic lens substrates of even thermoset plastics were structured into well-defined features.

**Table 1: Surface structuring of spectacle plastic lens substrates (without any coating)**

| Sample ID | Lens substrate | Printhead and Nozzle size | Inkjet printing dpi | Photonic curing | Height - nm | Width - µm |
|---|---|---|---|---|---|---|
| Example 1 | CR39 | Spectra S class, 80 pL | 972 | Condition 1 | 122 | 1230 |
| Example 2 | MR8 | Spectra S class, 80 pL | 972 | Condition 1 | 133 | 920 |
| Example 3 | MR7 | Spectra S class, 80 pL | 972 | Condition 1 | 95 | 1070 |

### Examples 4-7: Surface structuring of a spectacle plastic lens substrate coated with a hard coat

A thermal curable siloxane-based resin (MP-1154D, SDC Technologies, Inc., USA) was coated on the spectacle plastic lens substrate CR39 (Example 4-7) having a refractive index of 1.50 as hard coat. The siloxane-based resin was applied to the spectacle plastic lens substrates with a layer thickness of 2.5 µm, using spin-coating method and thermally cured for 5 mins at 60°C (pre-cure) and for 120 min at a temperature of 110 °C (final curing).

Structuring inks of oleic acid (94.5 wt.% oleic acid (99% purity, Sigma-Aldrich), 0.5 wt.% Silicone based surfactant SF1188A and 5 wt.% 1-methoxy-2-proponal) were deposited on HC coated lens substrate with varied drop-to-drop distance: 1.5 mm (Example 4), 0.8 mm (Example 5), 0.4 mm (Example 6) and 0.2 mm (Example 7).

Afterwards, structuring ink drops were exposed to electromagnetic pulses as described above with respect to Examples 1 to 3. The deposited structuring ink drops were subsequently removed as described above with respect to Examples 1 to 3.

In Table 2 the results show that protrusions with heights ranging from 12-50 nm were generated on the final cured hard coat layer.

Modification of process parameters used in photonic curing generated even higher structures. With the adjusting of drop-drop distance of the deposited structuring-ink, the structural density was clearly increased starting with a spacing 1.5 mm and going down to 200 µm.

**Table 2: Surface structuring of a spectacle plastic lens substrate coated with a hard coat**

| Sample ID | Drop-drop distance mm | Inkjet printing | Photonic curing | Height - nm | Width - µm |
|---|---|---|---|---|---|
| Example 4 | 1,5 | 80 pL, 1 drop | Condition 1 | 28 | 380 |
| Example 5 | 0,8 | 80 pL, 1 drop | Condition 1 | 18-20 | 230 |
| Example 6 | 0,4 | 80 pL, 1 drop | Condition 1 | 14-15 | 200 |
| Example 7 | 0,2 | 80 pL, 1 drop | Condition 1 | 12-13 | 180 (duplet peaks) |

### Examples 8-10: Structured hard coat surface showing from positive elevations to negative recession features

A thermal curable siloxane-based resin (same as in Examples 4-7) was coated on the spectacle plastic lens substrate CR39 having a refractive index of 1.50 as hard coat (HC). The siloxane-based resin was applied to the spectacle plastic lens substrates with a layer thickness of 2.5 µm, using spin-coating method and thermally cured for 5 mins at 60°C (pre-cure) and for 120 min at a temperature of 110 °C (final curing).

Structuring inks of oleic acid (94.5 wt.% oleic acid (99% purity, Sigma-Aldrich), 0.5 wt.% Silicone based surfactant SF1188A and 5 wt.% 1-methoxy-2-proponal) were deposited on HC coated lens substrate with varied drop-to-drop distance: 0.2 mm, but with different amount of ink via repeating the number of depositing process: 1 layer deposition (10pL, Example 8), 20 layers deposition (200 pL, Example 9) and 30 layers deposition (300 pL, Example 10).

Afterwards, structuring ink drops were exposed to electromagnetic pulses as described above with respect to Examples 1 to 3. The deposited structuring ink drops were subsequently removed as described above with respect to Examples 1 to 3.

In Table 3 the results show that elevations or protrusions with heights ranging from 15-20 nm (Example 1), and recessions starting from minus 20 nm (Example 2) with 20 layers of deposition, to minus 35nm (Example 3) with 30 layers of deposition. This height can be further tuned by choice of different structuring inks.

**Table 3: Structured surface (hard coat) with the variation of amount of structuring ink**

| Sample ID | Number of layers | Inkjet printing | Photonic curing | Height - nm | Width - µm |
|---|---|---|---|---|---|
| Example 8 | 1 layer | 10 pL | Condition 1 | 15-20 | 55 |
| Example 9 | 20 layers | 10 pL*20 | Condition 1 | minus(20-25) | 65 |
| Example 10 | 30 layers | 10 pL*30 | Condition 1 | minus(30-35) | 140-180 |

### Examples 11-12: Structured HC surface: fully cured vs. partially cured

A thermal curable siloxane-based resin (same as in Examples 4-7) was coated on the spectacle plastic lens substrate CR39 having a refractive index of 1.50 as hard coat (HC). The siloxane-based resin was applied to the spectacle plastic lens substrates with a layer thickness of 2.5 µm, using spin-coating method and thermally cured for 5 mins at 60°C (partially cured, Example 12) or first cured at 60°C for 5 mins and then cured at 110°C for 120 min (fully cured, Example 11).

The ink used in Examples 11-12 had a composition of 98.5 wt.-% citric acid water solution (50% (wt/wt)) and 1 wt.% silicone-based surfactant SF1188A and 0.5 wt.% polyacrylic acid copolymer (CAS No.: 9003-01-4, Sigma-Aldrich). The ink was deposited on HC coated lens substrate with drop-to-drop distance: 0.2 mm. The ink was only deposited one layer.

Afterwards, structuring ink drops were exposed to electromagnetic pulses as described above with respect to Examples 1 to 3. The deposited structuring ink drops were subsequently removed as described above with respect to Examples 1 to 3.

In Table 4 the results show that protrusions with heights ranging from 50-60 nm to 520-550 nm. The obvious change is mostly related to the different level of the stiffness of HC network.

**Table 4: With structuring ink as citric acid, the comparison of structuring fully cured and partially cured HC resin**

| Sample ID | Structuring substrate | Inkjet printing | Photonic curing | Height - nm | Width - µm |
|---|---|---|---|---|---|
| Example 11 | Fully cured HC (110°C for 120 mins) | 10 pL, 1 drop | Condition 1 | 50-60 | 120 |
| Example 12 | Partially cured HC (60°C for 5 mins) | 10 pL, 1 drop | Condition 1 | 520-550 | 40-45 |

### Example 13-15: Surface structuring of a spectacle plastic lens substrate coated with a partially cured hard coat using ink-jet droplets with different structuring-ink compositions

In Examples 13-15, a variety of inks was employed to generate surface topographical structures on a pre-cured siloxane based thermal curable hard coat layer (see above Examples 4 to 7). The spectacle plastic lens substrate used in Examples 13 to 15 was identical. The spectacle plastic lens substrate was CR39, with a refractive index of 1.5 which was coated with a hard coat as described with respect to Examples 4 to 7, but only pre-cured before surface structuring. The pre-curing was done at 60°C for 5 minutes.

The used inks were a single organic acid-based ink component as indicated in Table 5. Besides the indicated organic acid, the ink used in Example 13 had a composition of 94.5 wt.% oleic acid (99% purity, Sigma-Aldrich), 0.5 wt.% Silicone based surfactant SF1188A, 5 wt.% 1-methoxy-2-proponal.

The ink used in Example 14 had a composition of 90 wt.-% lactic acid (90% Titration Sigma-Aldrich), 9.8 wt.-% water and 0.2 wt.% silicone-based surfactant SF1188A.

The ink used in Example 15 had a composition of 98.5 wt.-% citric acid water solution (50% (wt/wt)) and 1 wt.% silicone-based surfactant SF1188A and 0.5 wt.% Polyacrylic acid copolymer (Sigma-Aldrich).

As can be seen in Table 5, the ink-jet droplets based on citric acid turned out to be much more effective than lactic acid and oleic acid. The generated topographic structure had a height of over 500 nm, when using citric acid, compared to oleic acid resulting in a height of below 15 nm.

**Table 5: Structured surface (hard coat) with the variation of structuring inks**

| Sample ID | Structuring ink | Inkjet printing | Photonic curing | Height - nm | Width - µm |
|---|---|---|---|---|---|
| Example 13 | Oleic acid based | 10 pL, 1 drop | Condition 1 | 8-15 | 110-120 |
| Example 14 | Lactic acid based | 10 pL, 1 drop | Condition 1 | 80-90 | 50-55 |
| Example 15 | Citric acid based | 10 pL, 1 drop | Condition 1 | 520-550 | 40-45 |

### II. Characterization on the optical properties of the structured surfaces

Characterizations of generated surface structures were performed via the white-light scattering microscope of Zygo Corporation, USA.

**The generated samples from Examples 4-7 were transferred to the lens top surface after deposition of anti-reflection coating (AR) and clean coat (CC).**

Optical properties of the above structured surfaces were measured with UV-vis spectrometer of Hunterlab (UltraScan PRO UV-VIS Spectrophotometer (US), and haze level was measured with PerkinElmer Lambda 950S UV-VIS spectroscopy. The results are shown in Table 6.

Comparing with a respective topographically unstructured reference surfaces, the optical transmittance and reflectivity values were not affected by the increased surface roughness level (shown in Table 5, while the haze level of hard coat (HC) layer with structured surfaces was significantly decreased, from 0.16 to 0.01.

### III. Characterization on the functional properties of the structured surfaces

The contact angle on structured surface was measured with OCA setup from DataPhysics Instruments GmbH, Germany. The contact angle change between samples with and without topographically structured surfaces. As shown in the Table 6, the contact angle of structured surface of HC layer decreased from about 80 degree to 73 degree for water, and from about 33 to about 17 degree for hexadecane. The result well fulfilled the classic Wenzel equation in explaining surface wetting property variation upon the presence of surface roughness. As the topographically unstructured (bare) HC layer is hydrophilic, topographically structuring of the surface or increase of roughness level improved its hydrophilic property and reduced surface contact angles.

**Table 6: Characterization on the optical properties of the structured surfaces**

| Sample name | Transmittance - % | Reflectivity @ 550 nm - % | Haze of structured HC layer | Water contact angle (degree) | Hexadecane contact angle (degree) |
|---|---|---|---|---|---|
| HC ref (no structure) | 92.7 | 7.3 | 0.158 | 79.7 | 33.1 |
| HC-0.4 mm pitch | 92.6 | 7.3 | 0.010 | 73.3 | 20.9 |
| HC-0.2 mm pitch | 92.6 | 7.3 | 0.012 | 73.0 | 17.1 |

## Claims

1. Method of generating a topographic structure or a plurality of topographic structures developed out of or within a surface of an uncoated plastic substrate or a plastic substrate coated with a hard coat comprising the following steps:
(a) providing a plastic substrate based on a plastic material having a front surface and a back surface, said plastic substrate being an uncoated plastic substrate or a plastic substrate coated with a hard coat, said hard coat covering at least one of said front surface and back surface;
(b) depositing on at least one of said front surface and back surface droplets of a structuring ink;
(c) irradiating said droplets of structuring ink deposited on at least one of said front surface and back surface;
(d) removing said deposited droplets after having been irradiated and providing a topographic structure or a plurality of topographic structures developed out of or within said at least one of said front surface and back surface of said uncoated plastic substrate or plastic substrate coated with a hard coat.

2. Method according to claim 1,
wherein said topographic structure or topographic structures is/are formed by at least one of elevations developed out of the surface of said uncoated plastic substrate or said plastic substrate coated with a hard coat and of recesses developed in the surface of said uncoated plastic substrate or said plastic substrate coated with a hard coat.

3. Method according to claim 2,
wherein said elevation(s) of said topographic structure or plurality of topographic structures is/are formed by swelling plastic material of said uncoated substrate or by swelling of said hard coat of said plastic substrate coated with a hard coat, and/or
wherein said recess(es) of the topographic structure or plurality of topographic structures is/are formed by removing plastic material from said surface of the uncoated substrate or by removing hard coat of said plastic substrate coated with a hard coat.

4. Method according to any one of claims 1 to 3,
wherein said topographic structure or topographic structures has/have a three-dimensional shape, selected from the group of Gaussian shape, hemi-spherical lenslets, cones, truncated cones, cylinders, and mixtures thereof.

5. Method according to any one of claims 1 to 4,
further comprising the step of:
arranging said topographic structures in the form of at least one array.

6. Method according to any one of claims 1 to 5,
wherein each topographic structure has a diameter within a range of 200 nm to 35 mm and a height or a depth within a range of 5 nm to 5 µm.

7. Method according to any one of claims 1 to 6,
further comprising the step of:
coating said topographic structure or said plurality of topographic structures with one or more layers of a material distinct from the material of said topographic structure or said plurality of topographic structures, thus embedding said topographic structure or said plurality of topographic structures in or under said one or more layers of said material distinct from said material of said topographic structure or plurality of topographic structures.

8. Method according to any one of claims 1 to 7,
wherein said hard coating layer is partially cured or fully cured before said droplets of structuring ink are deposited on said hard coating layer and irradiated.

9. Method according to any one of claims 1 to 8,
wherein as said plastic substrate a spectacle plastic lens substrate is used.

10. Plastic substrate based on a plastic material having a front surface and a back surface, said plastic substrate being an uncoated plastic substrate or a plastic substrate coated with a hard coat, said hard coat covering at least one of said front surface and back surface,
**characterized in that,**
a topographic structure or plurality of topographic structures is/are developed out of or within a surface of said plastic material of the uncoated plastic substrate or developed out of or within said hard coat of said coated plastic substrate.

11. Plastic substrate according to claim 10, wherein said topographic structure or said plurality of topographic structures is/are embedded in one or more layers of a material distinct from said material of the topographic structure or plurality of topographic structures.

12. Plastic substrate according to claim 10 or 11, wherein said topographic structure each has a diameter within a range of 200 nm to 35 mm and a height or a depth within a range of 5 nm to 5 µm.

13. Plastic substrate according to any one of claims 10 to 12,
wherein said topographic structure or plurality of topographic structures is/are transparent, and maintain(s) a transmittance level of said uncoated plastic substrate or said plastic substrate coated with a hard coat.

14. Plastic substrate according to any one of claims 10 to 13, wherein said topographic structure or plurality of topographic structures is coated with a functional top surface which is selected from the group consisting of a hydrophobic surface, super hydrophobic surface, easy-to-clean surface, antifog surface, antimicrobial surface, and mixtures thereof.

15. Plastic substrate according to any one of claims 10 to 14, wherein said plastic substrate is a spectacle plastic lens substrate.
